# EUROPÄISCHE PATENTSCHRIFT

(11) **EP 1 833 155 B1**
(45) Veröffentlichungstag und Bekanntmachung des Hinweises auf die Patenterteilung: **15.07.2020**
(21) Anmeldenummer: 07100636.5
(22) Anmeldetag: 17.01.2007
(51) Int. Cl.: H02M 7/48, H02M 7/66, H02M 1/00

(54) **Wechselrichter und Verfahren zum Betrieb des Wechselrichters**
Inverter and method for operating the inverter
Onduleur et procédé de fonctionnement de l'onduleur

(30) Priorität: 07.03.2006 DE 102006010525
(43) Veröffentlichungstag der Anmeldung: 12.09.2007
(73) Patentinhaber: Siemens Aktiengesellschaft, 80333 München (DE)
(72) Erfinder: Hackl, Franz, 1130, Wien (AT); Hörist, Gerald, 1220, Wien (AT); Strobl, Walter, 1030, Wien (AT)
(74) Vertreter: Maier, Daniel Oliver

(56) Entgegenhaltungen:
- EP-A1- 0 075 214
- WO-A1-2005/086333
- DE-C1- 4 037 390
- JP-A- 2000 214 937
- JP-A- 2003 087 960
- US-A- 5 783 908
- US-B1- 6 940 307

## Beschreibung

Die Erfindung betrifft einen Wechselrichter zum Anschluss einer Gleichstromquelle an ein Wechselstromnetz mit wenigstens einer Stromversorgung zur Versorgung von Kommunikationsschaltungen und Messwerterfassungsschaltungen des Wechselrichters. Des Weiteren betrifft die Erfindung Verfahren zum Betrieb des Wechselrichters.

Dezentrale Gleichstromquellen wie Photovoltaikanlagen oder Brennstoffzellen können einen erzeugten Strom nicht direkt in ein öffentliches Wechselstromnetz oder in ein Inselnetz einspeisen. Mit einem zwischengeschalteten Wechselrichter wird der Gleichstrom in einen Wechselstrom umgewandelt und mit angepasster Spannung und angepasstem Phasenwinkel in ein Stromnetz eingespeist. Dazu ist es notwendig, dass der Wechselrichter Messwerterfassungsschaltungen umfasst, mittels welchen die Stromnetzgrößen laufend gemessen werden.

Moderne Wechselrichter für alternative Stromquellen umfassen in der Regel zudem Kommunikationsschaltungen zum Anschluss an ein Kommunikationsnetz, beispielsweise an das World Wide Web. Damit können Betriebszustände und Betriebsgrößen wie beispielsweise die eingespeiste Energie von der Ferne abgefragt und Modifikationen an Einstellgrößen vorgenommen werden.

Die Versorgung der Messwerterfassungsschaltungen und Kommunikationsschaltungen mit Strom muss auch gegeben sein, wenn die an den Wechselrichter angeschlossene Gleichstromquelle keine Energie liefert. Deshalb sind in Wechselrichtern üblicherweise Stromversorgungen angeordnet, die an das Wechselstromnetz angeschlossen sind und die Netzspannung in für die Schaltungen erforderliche Gleichspannungen umwandeln. Somit ist sichergestellt, dass die Kommunikation mit dem Wechselrichter unabhängig von den Aktivitäten einer Gleichstromquelle funktioniert und dass die Stromnetzgrößen für eine störungsfreie Energieeinspeisung zu jeder Zeit bekannt sind.

Die laufende Versorgung der Messwerterfassungsschaltungen und der Kommunikationsschaltungen beeinflusst jedoch den Gesamtwirkungsgrad eines Wechselrichters negativ, da immer Strom verbraucht wird, auch wenn keine Energieeinspeisung erfolgt und keine Kommunikation erforderlich ist. Das ist vor allem für Gleichstromquellen wie Photovoltaikanlagen bedeutsam, bei welchen über längere Perioden hinweg (z.B. bei Nacht) keine Energie zur Einspeisung zur Verfügung steht.

Der Erfindung liegt deshalb die Aufgabe zugrunde, für Wechselrichter eine Lösung anzugeben, die eine Verbesserung des Gesamtwirkungsgrades bewirkt.

Erfindungsgemäß geschieht dies mit einem Wechselrichter der eingangs genannten Art, wobei die wenigstens eine Stromversorgung mittels eines Steuerungselements ein- und ausschaltbar ist. Damit wird die Möglichkeit geschaffen, die Stromaufnahme durch die wenigstens eine Stromversorgung für jene Zeitabschnitte abzuschalten, während derer bekanntermaßen keine Energieeinspeisung und keine Kommunikation erfolgt.

Eine vorteilhafte Ausgestaltung der Erfindung sieht vor, dass eine erste Stromversorgung zur Bereitstellung einer Grundspannung ausgebildet ist und dass eine weitere Stromversorgung zur Umwandlung der Grundspannung in wenigstens eine Hilfsspannung vorgesehen ist. Die erste Stromversorgung kann dabei als einfache Schaltung mit geringem Stromverbrauch ausgebildet werde. Die weitere Stromversorgung zur Bereitstellung der Hilfsspannungen kann dann mittels Steuerungselement bedarfsgesteuert ein- und ausgeschaltet werden.

Dabei ist es von Vorteil, wenn die weitere Stromversorgung mittels einer bistabilen Multivibratorschaltung ein- und ausschaltbar ausgestaltet ist. Auf diese Weise ist sichergestellt, dass der Schaltzustand ohne weitere Energiezuführung erhalten bleibt.

Als Steuerungselement ist vorteilhafterweise ein so genanntes Electrically Programmable Logic Device (EPLD) vorgesehen. In diesem Electrically Programmable Logic Device sind dann einige Register für die Steuerung der Betriebszustände belegt.

In einer vorteilhaften Anordnung ist dabei an die weitere Stromversorgung ein Mikrocomputer angeschlossen, welcher mit dem Electrically Programmable Logic Device verbunden ist. Der Mikrocomputer dient dabei zur Ausführung von Schalt-, Speicher- und Messvorgängen und kann über das EPLD ein- und ausgeschalteten werden. Das wirkt sich positiv auf den Gesamtwirkungsgrad aus, da der Mikrocomputer nur im Bedarfsfall Strom verbraucht, beispielsweise nur während der Energieeinspeiszeiten.

Von Vorteil ist es zudem, wenn auf das Register des Electrically Programmable Logic Device mittels Mikrocomputer zugreifbar ist. Damit können mittels Mikrocomputer Einstellungsänderungen des Electrically Programmable Logic Device vorgenommen werden.

In einer weiteren vorteilhafte Ausprägung der Erfindung ist vorgesehen, dass die weitere Stromversorgung mit einer Spannungsüberwachungseinrichtung und/oder einer Tastatur und/oder einer Echtzeituhr verbunden ist. Somit können bei abgeschalteter weitere Stromversorgung verschiedene Auslöser zum Einschalten der weiteren Stromversorgung führen. Bei Photovoltaikanlagen beispielsweise misst eine Paneelspannungsüberwachungseinrichtung laufend die von den Solarpaneelen gelieferte Spannung und schaltet bei Sonnenaufgang automatisch die weitere Stromversorgung wieder ein. Bei anderen Gleichstromquellen geschieht dies in gleicher Weise durch entsprechende Spannungsüberwachungseinrichtungen. Weitere Auslöser zum Einschalten der weiteren Stromversorgung sind Signale einer Tastatur oder einer Echtzeituhr.

Vorteilhafterweise ist das Electrically Programmable Logic Device über wenigstens eine Kommunikationsschnittstelle mit einem Kommunikationsnetz verbunden. Damit wird ein Fernzugriff auf das Electrically Programmable Logic Device möglich und die weitere Stromversorgung kann bei Bedarf aus dem Kommunikationsnetz heraus abgeschaltet werden.

Günstig ist es dabei, wenn die wenigstens eine Kommunikationsschnittstelle als eine Ethernetschnittstelle und/oder als eine EIA-485-Schnittstelle ausgebildet ist. Die Ethernetschnittstelle ermöglicht eine einfache Anbindung an ein Local Area Network (LAN) oder an das World Wide Web (WWW). Eine EIA-485-Schnittstelle bietet zudem eine einfache und störungsunempfindliche Verbindung mehrerer Wechselrichter, die im Verbund betrieben werden. Die Verbindungen können dabei über weitere Strecken als bei einem Ethernet erfolgen, wobei preisgünstige zweiadrige Kabel zum Einsatz kommen.

Günstig ist es auch, wenn die wenigstens eine Stromversorgung mittels eines Netzschalters an das Wechselstromnetz angeschaltet ist. Durch das Betätigen des Netzschalters ist der Wechselrichter dann völlig vom Netz zu trennen und nimmt somit keinen Strom mehr auf.

Betrieben wird ein Wechselrichter mit Mikrocomputer in der Weise, dass der Mikrocomputer mittels Electrically Programmable Logic Device ein- und ausgeschaltet wird. Der Mikrocomputer ist dann nur im Bedarfsfall aktiv und nimmt ansonsten keinen Strom auf, wodurch der Gesamtwirkungsgrad des Wechselrichters verbessert wird.

Dabei ist es auch von Vorteil, wenn der Mikrocomputer durch ein Signal der Spannungsüberwachungseinrichtung und/oder der Tastatur und/oder der Echtzeituhr eingeschaltet wird. Die Aktivierung des Mikrocomputers erfolgt somit automatisch, wenn genügend Spannung zur Einspeisung vorhanden ist oder wenn ein Zugriff auf den Wechselrichter mittels Tastatur erfolgt oder wenn zu vordefinierten Zeitpunkten eine Aktivierung mittels Echtzeituhr erwünscht ist.

Zudem wird ein Wechselrichter mit Electrically Programmable Logic Device in der Weise betrieben, dass die weitere Stromversorgung mittels Electrically Programmable Logic Device ausgeschaltet wird. Bis auf die erste Stromversorgung zur Aufrechterhaltung der Grundspannung sind dann alle Verbraucher ausgeschaltet.

Dabei ist es günstig, wenn die weitere Stromversorgung durch ein Signal der Spannungsüberwachung und/oder der Tastatur und/oder der Echtzeituhr eingeschaltet wird. Die weitere Stromversorgung schaltet sich dann auch automatisch ein, wenn genügend Spannung zur Einspeisung vorhanden ist oder wenn ein Zugriff auf den Wechselrichter mittels Tastatur erfolgt oder wenn zu vordefinierten Zeitpunkten eine Aktivierung mittels Echtzeituhr erwünscht ist.

Stand der Technik: Dokument EP0075214 zeight ein Verfahren zum Abschalten des Standby-Betriebs eines Fernsehempfängers, der einen Mikroprozessor enthält.

Die Erfindung wird nachfolgend in beispielhafter Weise unter Bezugnahme auf die beigefügten Figuren erläutert. Es zeigen in schematischer Darstellung:
- Fig. 1:: Anordnung der Wechselrichterelemente
- Fig. 2:: Betriebszustände des Wechselrichters

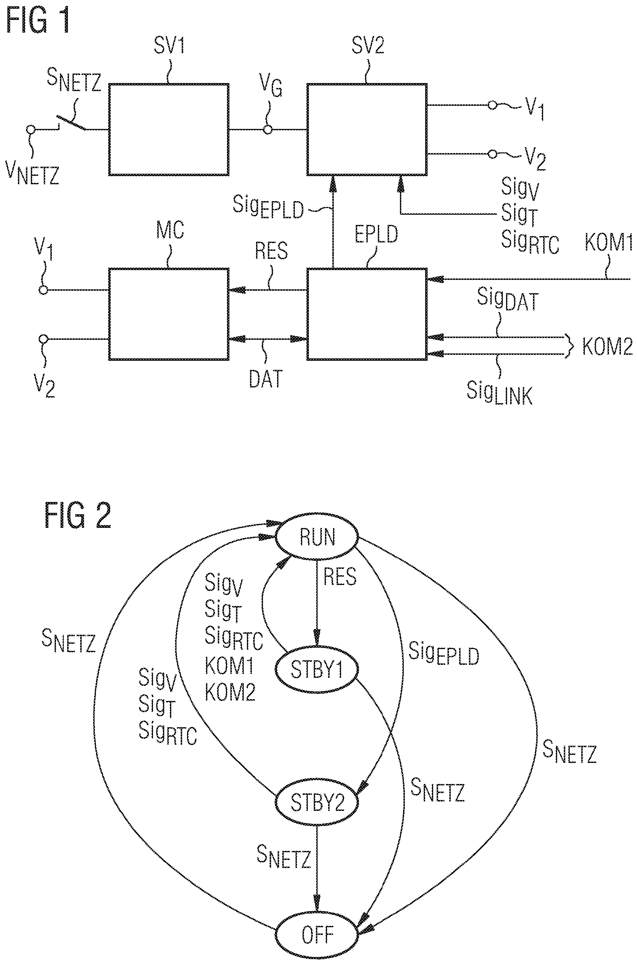

In Figur 1 sind jene Elemente des Wechselrichters dargestellt, mittels derer die Stromversorgung der Kommunikationsschaltungen und Messwerterfassungsschaltungen erfolgt. An ein Wechselstromnetz V_{NETZ} ist über einen Netzschalter S_{NETZ} eine erste Stromversorgung SV1 angeschaltet. Am Ausgang dieser ersten Stromversorgung SV1 liegt die Grundspannung V_{G} (z.B. 5V) an, die als Eingangsspannung für die weitere Stromversorgung SV2 dient. Diese zweite Stromversorgung SV2 ist mittels einer bistabilen Multivibratorschaltung (Flip-Flop) ein- und ausschaltbar ausgestaltet und liefert am Ausgang beispielsweise zwei Hilfsspannungen V₁ und V₂ (z.B. 1, 5V und 3, 3V). Diese Hilfsspannungen V₁ und V₂ versorgen unter anderem einen Mikrocomputer MC, welcher über eine Datenschnittstelle DAT mit einem Electrically Programmable Logic Device EPLD verbunden ist. Über diese Datenschnittstelle DAT kann auf die Register des Electrically Programmable Logic Device EPLD zugegriffen werden. Zudem wird bei Bedarf mittels Electrically Programmable Logic Device EPLD ein Reset-Signal RES an den Mikrocomputer MC übermittelt und so dessen Stromverbrauch reduziert.

Das Electrically Programmable Logic Device EPLD ist zudem über zwei Kommunikationsschnittstellen KOM1 und KOM2 mit einem Kommunikationsnetz verbunden. Dabei ist die erste Kommunikationsschnittstelle KOM1 beispielsweise als EIA-485-Schnittstelle ausgebildet. Damit können störungsunempfindliche Datenverbindungen mit zweiadrigen Kabeln zwischen einzelnen, im Verbund betriebenen Wechselrichtern realisiert werden.

Für eine Anbindung an ein LAN oder an das WWW ist als zweite Kommunikationsschnittstelle KOM2 eine Ethernetschnittstelle vorgesehen. Dabei unterscheidet man zwischen einem Link-Signal Sig_{LINK}, das bei verbundenem Ehternetkabel und eingeschaltetem Treiber vorhanden ist und einem Datensignal Sig_{DAT}, das erst dann vorhanden ist, wenn an den Wechselrichter Daten gesendet werden. Abhängig von den Anforderungen an den Wechselrichter können die Signale der ersten Kommunikationsschnittstelle KOM1 ebenso wie die beiden Signale Sig_{LINK} und Sig_{DAT} der zweiten Kommunikationsschnittstelle KOM2 zu Änderungen der Betriebszustände führen.

Eine weitere Signalverbindung besteht zwischen dem Electrically Programmable Logic Device EPLD und der weiteren Stromversorgung SV2. Ein entsprechendes Signal des Electrically Programmable Logic Device Sig_{EPLD} führt bei Bedarf zur Abschaltung der weiteren Stromversorgung SV2, d.h die bistabile Multivibratorschaltung kippt in den Abschaltungszustand.

Die weitere Stromversorgung SV2 ist im Abschaltungszustand nicht mehr über das Electrically Programmable Logic Device EPLD aktivierbar, da der Mikrocomputer MC nicht mehr mit Strom versorgt wird. Versorgt wird nur mehr die bistabile Multivibratorschaltung der weiteren Stromversorgung SV2. Eine Aktivierung ist mittels zusätzlich mit der weiteren Stromversorgung SV2 verbundener Signalquellen vorgesehen. Das können eine Spannungsüberwachungseinrichtung, eine Tastatur, eine Echtzeituhr (Real Time Clock) oder Kombinationen davon sein. Die Spannungsüberwachungseinrichtung liefert dann beispielsweise bei einer Photovoltaikanlage ein Aktivierungssignal Sig_{V}, wenn in der Früh die Sonne aufgeht und genügend Spannung zur Einspeisung in das Stromnetz vorhanden ist.

Mittels einer Tastatur kann eine Bedienperson vor Ort ein entsprechendes Signal Sig_{T}, beispielsweise eine bestimmte Tastenkombination, an die weitere Stromversorgung SV2 übermitteln und diese aktivieren.

Die Echtzeituhr ist geeignet, um die weitere Stromversorgung SV2 zu festgelegten Zeiten mit einem entsprechenden Signal Sig_{RTC} zu aktivieren.

In Figur 2 sind beispielhafte Betriebszustände und zugeordnete Auslösesignale für Zustandsänderungen dargestellt. Es sind dabei vier Betriebszustände definiert. Im normalen Betriebszustand RUN sind alle Elemente mit Strom versorgt. Der Stromverbrauch ist in diesem Zustand am höchsten.

Um den Stromverbrauch zu reduzieren und so den Gesamtwirkungsgrad zu verbessern ist für Betriebszustände des Wechselrichters, bei welchen keine Einspeisung in das Stromnetz erfolgt, ein erster Standby-Zustand STBY1 definiert. In diesem ersten Standby-Zustand STBY1 wird der Mikrocomputer MC in den Reset-Zustand versetzt und so dessen Stromverbrauch reduziert.

In diesem ersten Standby-Zustand STBY1 kann das Gerät wieder mittels eines Signals einer Kommunikationsschnittstelle KOM1, KOM2 oder mittels eines Signals der Spannungsüberwachungseinrichtung Sig_{V}, der Tastatur Sig_{T} oder der Echtzeituhr Sig_{RTC} aktiviert werden. Dieser erste Standby-Zustand STBY1 eignet sich somit für kürzere Standbyzeiten, während derer weiterhin ein Zugriff auf den Wechselrichter über ein Kommunikationsnetz erwünscht ist.

Die Aktivierung mittels einer RS-485-Schnittstelle funktioniert dabei in der Weise, dass die Treiber der Schnittstelle auf Lesen stehen und dass das Empfangen von Daten als Aktivierungsereignis in einem Register des Electrically Programmable Logic Device EPLD definiert ist. Eine Aktivierung mittels Ethernetschnittstelle setzt die Versorgung der Physik der Schnittstelle voraus, d.h. auch hier muss die weitere Stromversorgung SV2 weiterhin Strom liefern. Als Auslöser der Aktivierung ist dann wieder das Empfangen von Daten als Aktivierungsereignis in einem Register des Electrically Programmable Logic Device EPLD definiert.

Zur weiteren Reduzierung des Stromverbrauchs ist ein zweiter Standby-Zustand STBY2 für längere Standbyzeiten, beispielsweise während der Nachtstunden bei Photovoltaikanlagen vorgesehen. Dabei wird beispielsweise über ein Register des Electrically Programmable Logic Device EPLD ein Signal Sig_{EPLD} an die zweite Stromversorgung SV2 übermittelt und diese abgeschaltet. Eine andere Möglichkeit der Abschaltung besteht darin, dass mittels Spannungsüberwachungseinrichtung für eine vorgegebene Zeit eine zu geringe Spannung der Gleichstromquelle zur Einspeisung erkannt wird und infolge dessen ein entsprechendes Abschaltsignal an die weitere Stromversorgung SV2 übermittelt wird.

Im zweiten Standby-Zustand STBY2 ist nur mehr die bistabile Multivibratorsschaltung mit Strom versorgt. Die Aktivierung der weiteren Stromversorgung SV2 erfolgt dann entweder über ein Signal der Spannungsüberwachungseinrichtung Sig_{V}, der Tastatur Sig_{T} oder der Echtzeituhr Sig_{RTC}. Bei einer Photovoltaikanlage überwacht beispielsweise eine in reiner Hardware realisierte Spannungsüberwachungseinrichtung im Leistungsteil des Wechselrichters die Paneelspannung. Steigt diese über einen vorgegebenen Wert (üblicherweise am Morgen nach dem Sonnenaufgang), wird die Stromversorgung im Leistungsteil des Wechselrichters eingeschaltet. Sind die Spannungen der Stromversorgung im Leistungsteil vorhanden, wird vom ersten Standby-Zustand STBY1 und vom zweiten Standby-Zustand STBY2 in den normalen Betriebszustand RUN gewechselt. Durch dieses Signal wird auch ein Ausschalten im Betrieb verhindert, d.h. erst wenn das Leistungsteil abgeschaltet wird, kann wieder in den ersten oder zweiten Standby-Zustand STBY1, STBY2 gewechselt werden.

Bei der Aktivierung mittels Echtzeituhr wird beispielsweise eine Alarmfunktion an einem Alarm-Ausgang der Echtzeituhr genutzt. Dabei wird ein Alarmzeitpunkt eingestellt, zu dem ein Signal Sig_{RTC} die weitere Stromversorgung SV2 aktiviert und somit einen Zugriff auf den Wechselrichter über die Kommunikationsschnittstellen ermöglicht. Die Funktion der Echtzeituhr ermöglicht somit einen Fernzugriff auf den Wechselrichter, auch wenn sich dieser zunächst im Standby-Zustand STBY2 befindet.

Um sämtliche Verbraucher, also auch die erste Stromversorgung SV1 stromlos zu schalten, ist ein Netzschalter vorgesehen. Damit wird die Möglichkeit geschaffen, den Wechselrichter während längerer Perioden, in denen keine Einspeisungsenergie zur Verfügung steht, abzuschalten und somit den Gesamtwirkungsgrad über die Zeit zu optimieren. Ein Einschalten des Geräts erfolgt dann wieder mittels Netzschalter.

## Patentansprüche

1. Wechselrichter zum Anschluss einer Gleichstromquelle an ein Wechselstromnetz mit wenigstens zwei Stromversorgungen (SV1, SV2) zur Versorgung von Kommunikationsschaltungen und Messwerterfassungsschaltungen des Wechselrichters, wobei die wenigstens zwei Stromversorgungen (SV1, SV2) mittels eines Netzschalters (S_{NETZ}) an das Wechselstromnetz angeschaltet sind,
**dadurch gekennzeichnet, dass** die erste Stromversorgung (SV1) zur Bereitstellung einer Grundspannung (V_{G}) ausgebildet ist und dass die weitere Stromversorgung (SV2) zur Umwandlung der Grundspannung (V_{G}) in wenigstens eine Hilfsspannung (V₁, V₂) vorgesehen ist.

2. Wechselrichter nach Anspruch 1, **dadurch gekennzeichnet, dass** die weitere Stromversorgung (SV2) mittels einer bistabilen Multivibratorschaltung ein- und ausschaltbar ausgestaltet ist.

3. Wechselrichter nach einem der Ansprüche 1 oder 2, **dadurch gekennzeichnet, dass** als Steuerungselement ein so genanntes Electrically Programmable Logic Device (EPLD) vorgesehen ist.

4. Wechselrichter nach Anspruch 3, **dadurch gekennzeichnet, dass** an die weitere Stromversorgung (SV2) ein Mikrocomputer (MC) angeschlossen ist, welcher mit dem Electrically Programmable Logic Device (EPLD) verbunden ist.

5. Wechselrichter nach Anspruch 4, **dadurch gekennzeichnet, dass** auf das Register des Electrically Programmable Logic Device (EPLD) mittels Mikrocomputer (MC) zugreifbar ist.

6. Wechselrichter nach einem der Ansprüche 1 bis 5, **dadurch gekennzeichnet, dass** die weitere Stromversorgung (SV2) mit einer Spannungsüberwachungseinrichtung und/oder einer Tastatur und/oder einer Echtzeituhr verbunden ist.

7. Wechselrichter nach einem der Ansprüche 3 bis 6, **dadurch gekennzeichnet, dass** das Electrically Programmable Logic Device (EPLD) über wenigstens eine Kommunikationsschnittstelle (KOM1, KOM2) mit einem Kommunikationsnetz verbunden ist.

8. Wechselrichter nach Anspruch 7, **dadurch gekennzeichnet, dass** die wenigstens eine Kommunikationsschnittstelle (KOM1, KOM2) als eine Ethernetschnittstelle und/oder als eine EIA-485-Schnittstelle ausgebildet ist.

9. Verfahren zum Betrieb eines Wechselrichters nach einem der Ansprüche 4 und 5, **dadurch gekennzeichnet, dass** der Mikrocomputer (MC) mittels Electrically Programmable Logic Device (EPLD) ein- und ausgeschaltet wird.

10. Verfahren nach Anspruch 9, **dadurch gekennzeichnet, dass** der Mikrocomputer (MC) durch ein Signal der Spannungsüberwachungseinrichtung (Sigv) und/oder der Tastatur (Sig_{T}) und/oder der Echtzeituhr (Sig_{RTC}) eingeschaltet wird.

11. Verfahren zum Betrieb eines Wechselrichters nach einem der Ansprüche 3 bis 8, **dadurch gekennzeichnet, dass** die weitere Stromversorgung (SV2) mittels Electrically Programmable Logic Device (EPLD) ausgeschalten wird.

12. Verfahren nach Anspruch 9, **dadurch gekennzeichnet, dass** die weitere Stromversorgung (SV2) durch ein Signal der Spannungsüberwachungseinrichtung (Sigv) und/oder der Tastatur (Sig_{T}) und/oder der Echtzeituhr (Sig_{RTC}) eingeschaltet wird.

## Claims

1. Inverter for connecting a DC source to an AC network with at least two power supplies (SV1, SV2) for supplying communication circuits and measurement value capturing circuits of the inverter, wherein the at least two power supplies (SV1, SV2) are connected to the AC network by means of a power switch (S_{NETZ}) ,
**characterised in that** the first power supply (SV1) is configured to provide a basic voltage (V_{G}) and that the further power supply (SV2) is provided to convert the basic voltage (V_{G}) into at least one auxiliary voltage (V₁, V₂).

2. Inverter according to claim 1, **characterised in that** the further power supply (SV2) is embodied such that it can be switched on and off by means of a bistable multivibrator circuit.

3. Inverter according to one of claims 1 or 2, **characterised in that** what is known as an electrically programmable logic device (EPLD) is provided as control element.

4. Inverter according to claim 3, **characterised in that** a microcomputer (MC), which is connected to the electrically programmable logic device (EPLD), is connected to the further power supply (SV2).

5. Inverter according to claim 4, **characterised in that** it is possible to access the register of the electrically programmable logic device (EPLD) by means of the microcomputer (MC) .

6. Inverter according to one of claims 1 to 5, **characterised in that** the further power supply (SV2) is connected to a voltage monitoring facility and/or a keyboard and/or a real-time clock.

7. Inverter according to one of claims 3 to 6, **characterised in that** the electrically programmable logic device (EPLD) is connected to a communication network via at least one communication interface (KOM1, KOM2).

8. Inverter according to claim 7, **characterised in that** the at least one communication interface (KOM1, KOM2) is configured as an Ethernet interface and/or as an EIA-485 interface.

9. Method for operating an inverter according to one of claims 4 and 5, **characterised in that** the microcomputer (MC) is switched on and off by means of the electrically programmable logic device (EPLD).

10. Method according to claim 9, **characterised in that** the microcomputer (MC) is switched on by a signal of the voltage monitoring facility (Sig_{V}) and/or the keyboard (Sig_{T}) and/or the real-time clock (Sig_{RTC}) .

11. Method for operating an inverter according to one of claims 3 to 8, **characterised in that** the further power supply (SV2) is switched off by means of the electrically programmable logic device (EPLD).

12. Method according to claim 9, **characterised in that** the further power supply (SV2) is switched on by a signal of the voltage monitoring facility (Sig_{V}) and/or the keyboard (Sig_{T}) and/or the real-time clock (Sig_{RTC}) .

## Revendications

1. Onduleur destiné à raccorder une source de courant continu à un réseau de courant alternatif comprenant au moins deux alimentations électriques(SV1, SV2) pour l'alimentation de circuits de communication et de circuits d'enregistrement de valeurs mesurées de l'onduleur, les au moins deux alimentations électriques (SV1, SV2) étant raccordées au réseau de courant alternatif au moyen d'un interrupteur secteur (S_{NETZ}) , **caractérisé en ce que** la première alimentation électrique (SV1) est réalisée pour fournir une tension de base (V_{G}) et **en ce que** l'autre alimentation électrique (SV2) est prévue pour convertir la tension de base (V_{G}) en au moins une tension auxiliaire (V₁, V₂).

2. Onduleur selon la revendication 1, **caractérisé en ce que** l'autre alimentation électrique (SV2) est réalisée de manière à pouvoir être enclenchée et coupée au moyen d'un circuit multivibrateur bistable.

3. Onduleur selon l'une des revendications 1 ou 2, **caractérisé en ce qu'**est prévu, en tant qu'élément de commande, ce qu'il est convenu d'appeler un Electrically Programmable Logic Device (EPLD).

4. Onduleur selon la revendication 3, **caractérisé en ce qu'**est raccordé à l'autre alimentation électrique (SV2) un micro-ordinateur (MC) qui est connecté à l'Electrically Programmable Logic Device (EPLD).

5. Onduleur selon la revendication 4, **caractérisé en ce que** le registre de l'Electrically Programmable Logic Device (EPLD) peut être accédé au moyen du micro-ordinateur (MC).

6. Onduleur selon l'une des revendications 1 à 5, **caractérisé en ce que** l'autre alimentation électrique (SV2) est connectée à un dispositif de surveillance de tension et/ou à un clavier et/ou à une horloge en temps réel.

7. Onduleur selon l'une des revendications 3 à 6, **caractérisé en ce que** l'Electrically Programmable Logic Device (EPLD) est connecté à un réseau de communication via au moins une interface de communication (KOM1, KOM2).

8. Onduleur selon la revendication 7, **caractérisé en ce que** l'au moins une interface de communication (KOM1, KOM2) est réalisée en tant qu'interface Ethernet et/ou en tant qu'interface EIA 485.

9. Procédé de fonctionnement d'un onduleur selon l'une des revendications 4 et 5, **caractérisé en ce que** le micro-ordinateur (MC) est enclenché et coupé au moyen de l'Electrically Programmable Logic Device (EPLD).

10. Procédé selon la revendication 9, **caractérisé en ce que** le micro-ordinateur (MC) est enclenché par un signal du dispositif de surveillance de tension (Sig_{V}) et/ou du clavier (Sig_{T}) et/ou de l'horloge en temps réel (Sig_{RTC}) .

11. Procédé de fonctionnement d'un onduleur selon l'une des revendications 3 à 8, **caractérisé en ce que** l'autre alimentation électrique (SV2) est coupée au moyen de l'Electrically Programmable Logic Device (EPLD).

12. Procédé selon la revendication 9, **caractérisé en ce que** l'autre alimentation électrique (SV2) est enclenchée par un signal du dispositif de surveillance de tension (Sig_{V}) et/ou du clavier (Sig_{T}) et/ou de l'horloge en temps réel (Sig_{RTC}) .
